# DEMANDE DE BREVET EUROPEEN

(11) **EP 0 761 996 A2**
(43) Date de publication de la demande: **12.03.1997**
(21) Numéro de dépôt: 96401726.3
(22) Date de dépôt: 05.08.1996
(51) Int. Cl.: F16C 11/12, F16C 27/00

(54) **Articulation à centre de rotation et montages d'application de celle-ci**

(30) Priorité: 12.09.1995 FR 9510650
(71) Demandeur: AEROSPATIALE SOCIETE NATIONALE INDUSTRIELLE, 75016 Paris (FR)
(72) Inventeur: Curbillon, Laurent, 06150 Cannes La Bocca (FR); Pellissier, Jean-Marc, Combattants - 06210 Mandelieu (FR)
(74) Mandataire: Bonnetat, Christian

(57) **Abrégé**

- La présente invention concerne une articulation à centre de rotation.
- Avantageusement, elle est constituée par un corps monobloc (2) se composant d'une partie interne (3), d'une partie externe (4) et d'une pluralité de bras transversaux (5) élastiquement déformables, reliant les deux dites parties interne et externe et convergeant en direction dudit centre de rotation (CR)

## Description

La présente invention concerne une articulation à centre de rotation.

On sait que l'assemblage de pièces, mécanismes ou dispositifs mécaniques peut requérir l'utilisation d'une liaison par articulation à centre de rotation.

Les articulations actuellement connues à centre de rotation sont du type sphérique ou à rotule, et elles comprennent principalement une bague interne et une bague externe, coopérant l'une avec l'autre par une portée sphérique qui est définie par la surface latérale convexe de la bague interne et par la surface latérale concave de la bague externe. Lorsque l'articulation est montée entre par exemple deux pièces à assembler, les bagues dont chacune coopère avec une pièce, peuvent avoir un débattement angulaire, certes limité, l'une par rapport à l'autre, en pivotant autour du centre de rotation de la portée sphérique.

Si ce type d'articulation sphérique ou à rotule est largement utilisé de façon quasi-universelle, il n'en présente pas moins certains inconvénients inhérents à sa conception même.

En effet, pour le bon fonctionnement de l'articulation, un jeu certes minime est nécessairement prévu entre les surfaces concave et convexe des bagues pour qu'elles puissent s'orienter librement l'une par rapport à l'autre. Aussi, lorsqu'une telle articulation avec jeu est soumise à des débattements angulaires limités (avec déplacements relatifs entre les bagues interne et externe), et à des charges alternées radiales et/ou axiales et ce, à des fréquences élevées, il apparaît, à l'usage, une usure prématurée de la lubrification prévue dans l'articulation et/ou du revêtement des surfaces fonctionnelles des bagues.

Cette dégradation tribologique de l'articulation, qui peut s'accentuer, lorsque celle-ci est soumise à des variations importantes de température (par exemple, dans des applications aéronautiques ou spatiales), engendre alors une augmentation du couple résistant entre les surfaces concave et convexe des bagues jusqu'à entraîner l'apparition de point dur, voire même le blocage de l'articulation.

On comprend donc que l'immobilisation intempestive ou irréversible de l'articulation, due à l'usure du contact, peut remettre en cause la fiabilité du mécanisme ou du dispositif sur lequel est montée l'articulation, et provoquer des dysfonctionnements de celui-ci qui peuvent s'avérer dangereux.

La présente invention a pour but de remédier à ces inconvénients et concerne une articulation à centre de rotation dont la conception garantit une fiabilité totale de fonctionnement à l'usage, indépendamment des efforts, et du milieu ambiant dans lequel elle est utilisée.

A cet effet, l'articulation à centre de rotation est remarquable, selon l'invention, en ce qu'elle est constituée par un corps monobloc se composant d'une partie interne, d'une partie externe et d'une pluralité de bras transversaux élastiquement déformables, reliant les deux dites parties interne et externe et convergeant en direction dudit centre de rotation.

Ainsi, grâce à l'invention, l'articulation à centre de rotation est dépourvue de jeu fonctionnel puisqu'elle est définie par un corps unique, monobloc, les bras de liaison faisant office de poutres élastiquement déformables autorisant le débattement angulaire des pièces, auxquelles sont respectivement fixées les parties interne et externe, autour du centre de rotation qui se trouve sur l'axe longitudinal dudit corps. En conséquence, l'articulation à corps monobloc de l'invention s'affranchit des problèmes précédents inhérents à l'usure de contact entre les surfaces des bagues et aux déplacements relatifs entre celles-ci, puisque selon l'invention, seuls les bras de liaison du corps monobloc se déforment.

Par ailleurs, par cette conception de l'articulation, sa réalisation et son montage se trouvent facilités.

Par exemple, lesdites parties interne et externe sont cylindriques et concentriques autour d'un même axe, et les fibres neutres desdits bras convergent vers ledit centre de rotation situé sur ledit axe.

Pour permettre une libre déformation des bras suite à des efforts aussi bien axiaux que radiaux, et à des moments de basculement, lesdits bras de liaison élastiquement déformables sont agencés de façon inclinée par rapport auxdites parties du corps. De préférence, chaque bras de liaison forme sensiblement un angle d'environ 60° par rapport à l'axe dudit corps.

Avantageusement, lesdits bras de liaison élastiquement déformables sont équi-angulairement répartis les uns par rapport aux autres autour desdites parties et leur section transversale est polygonale, par exemple carrée ou rectangulaire.

En outre, ledit corps de l'articulation est réalisé en une même matière, rendant celui-ci monolithique.

Une telle articulation trouve, particulièrement, quoique non exclusivement, des applications dans les domaines aéronautique et spatial notamment, dans lesquels les mécanismes ou systèmes peuvent être soumis temporairement ou non à des sollicitations et vibrations importantes qui engendrent des micro-débattements angulaires, et à des variations de température élevées.

Par exemple, dans le cas d'un montage d'un palier à roulements entre un arbre et un moyeu, auquel est associé un instrument spécifique, une articulation à centre de rotation telle que définie précédemment, peut être prévue soit entre ledit palier et ledit moyeu, soit entre ledit palier et ledit arbre.

Dans le cas du montage d'un réflecteur ou analogue de satellite, sur un dispositif mécanique de liaison à libération pyrotechnique ou autre, une telle articulation peut être agencée entre ledit dispositif, par sa partie interne, et ledit réflecteur, par sa partie externe.

Les figures du dessin annexé feront bien comprendre comment l'invention peut être réalisée. Sur ces figures, des références numériques désignent des éléments semblables.

La figure 1 représente, en coupe longitudinale, un exemple de réalisation de ladite articulation selon l'invention.

La figure 2 est une coupe transversale de ladite articulation selon la ligne II-II de la figure 1.

Les figures 3, 4 et 5 représentent des applications particulières de ladite articulation.

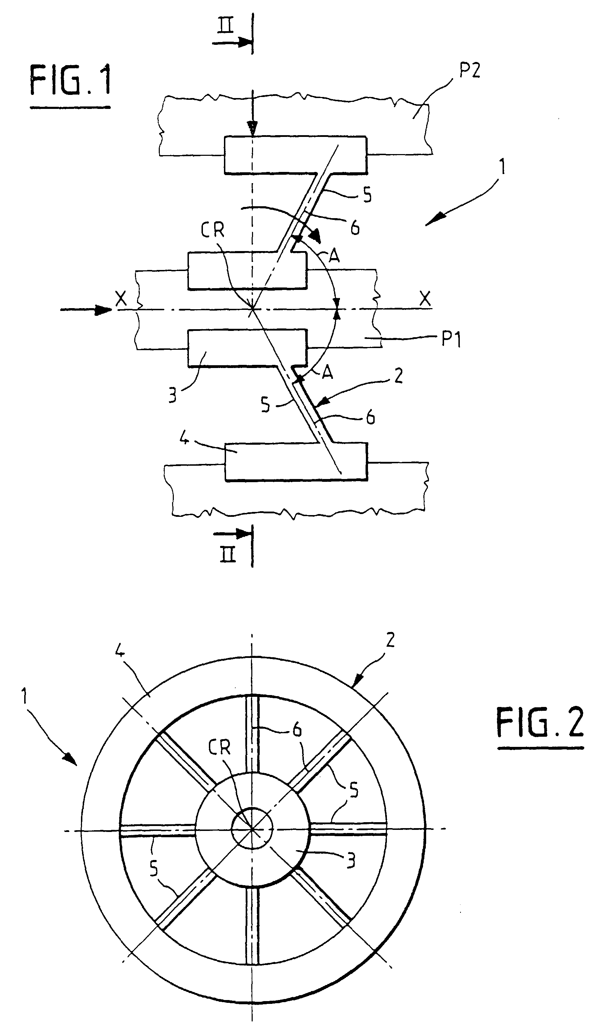

L'articulation 1 à centre de rotation CR, montrée sur les figures 1 et 2, est constituée par un corps monobloc 2 qui se compose de trois éléments, à savoir, une partie interne 3, une partie externe 4, et des bras de liaison 5 reliant transversalement la partie interne 3 à la partie externe 4.

Ces deux parties présentent chacune une forme cylindrique à section transversale annulaire analogue à une bague, et sont concentriques l'une par rapport à l'autre autour d'un axe commun X-X. L'articulation 1 peut être par exemple prévue entre une première pièce P1 telle qu'un arbre, dont l'axe est confondu avec l'axe X-X, et une seconde pièce P2 telle qu'alors un moyeu, et pour cela, la partie cylindrique interne 3 est fixement montée sur la pièce P1, tandis que la partie cylindrique externe 4 est fixement montée dans la pièce P2. Les deux parties cylindriques 3 et 4 sont rigides et sont reliées entre elles par une pluralité de bras de liaison 5 identiques, qui sont élastiquement déformables et qui convergent en direction d'un même point correspondant au centre de rotation CR de l'articulation. Ce centre CR est situé sur l'axe X-X du corps 2, comme le montre la figure 1, sensiblement au milieu de la longueur de ladite partie cylindrique interne 3.

En particulier, les bras de liaison élastiquement déformables 5 sont inclinés par rapport à l'axe X-X du corps, par exemple en formant un angle A de 60° avec ledit axe. Bien évidemment, l'angle A pourrait être différent selon les efforts et moments de basculement à supporter, et la rigidité recherchée. Les bras de liaison 5 sont équi-angulairement répartis, autour de l'axe X-X, les uns par rapport aux autres, comme le montre la figure 2. Dans cet exemple, huit bras sont prévus, mais là encore leur nombre pourrait être différent selon les exigences. La section transversale des bras 5 peut être polygonale telle que carrée ou rectangulaire.

Ces bras de liaison 5 font office de poutres élastiques qui peuvent se déformer élastiquement sous l'action d'efforts radial et axial et de moments de basculement (symbolisés par des flèches sur la figure 1) susceptibles d'être exercés sur ladite articulation, de façon à autoriser le débattement angulaire des pièces respectivement solidaires des parties externe et interne rigides, autour du centre de rotation CR vers lequel convergent les fibres neutres 6 desdits bras.

Bien évidemment, le dimensionnement de l'articulation 1 est fonction de son application et tient compte des charges à transmettre, de la rigidité recherchée, de la valeur souhaitée du débattement angulaire. A partir de là, la matière de l'articulation, et donc ses caractéristiques mécaniques, et les paramètres relatifs à la longueur, à la section, au nombre et à l'angle d'inclinaison des bras de liaison peuvent être définis avec précision.

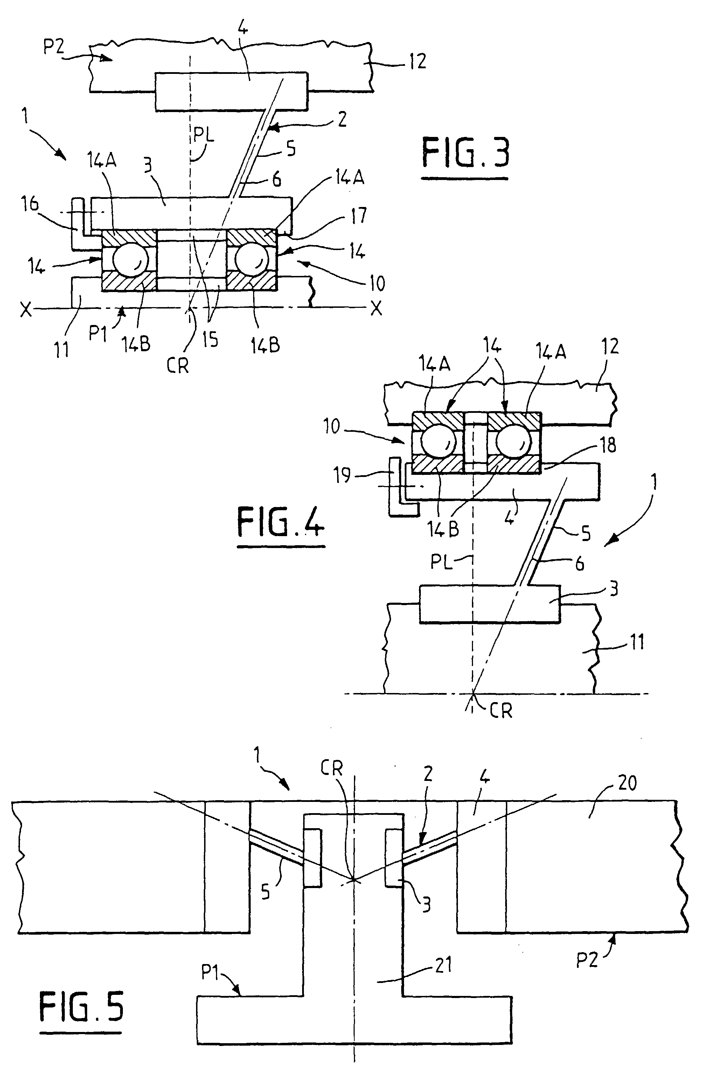

Une première application de l'articulation 1 de l'invention est représentée sur les figures 3 et 4 et concerne son montage sur des paliers à roulements à billes dans cet exemple.

On sait que les paliers des mécanismes associés à des instruments scientifiques prévus sur les satellites artificiels, doivent répondre à certaines exigences telles que :
- absence de jeu dans le palier, notamment lorsqu'une grande stabilité de l'axe de rotation est recherchée ;
- montage du palier sur une articulation à centre de rotation pour garantir un bon isostatisme de l'équipage mobile ;
- fiabilité du palier ; et
- résistance à des charges radiale et/ou axiale et à des "micro-rotulages" alternés à fréquence élevée (jusqu'à 2000 Hz), lors de la phase de lancement.

L'utilisation d'une articulation à rotule usuelle avec jeu peut entraîner des conséquences fâcheuses pour la mission à cause de l'apparition de point dur, comme expliqué précédemment. La mise en place d'une articulation 1 conforme à l'invention permet d'obvier aux inconvénients précédents et de respecter les exigences imposées en fournissant un palier à roulements à centre de rotation, sans jeu et fiable.

Dans le montage du palier 10 montré sur la figure 3, l'arbre 11 correspond à la pièce P1, tandis que le moyeu 12 correspond à la pièce P2. Deux roulements à billes 14 de petite dimension sont prévus dans ce cas. La partie interne 3 de l'articulation 1 est au contact des bagues extérieures 14A des roulements, tandis que sa partie externe 4 est fixée au moyeu 12. Les bagues intérieures 14B des roulements sont montées sur l'arbre tournant 11. Des entretoises 15 sont prévues entre les roulements et une pièce 16 peut être rapportée d'un côté de la partie interne 3 du corps 2 pour faire office de butée axiale pour les bagues extérieures des roulements, alors qu'un épaulement 17 peut être intégré dans l'autre côté de la partie interne 3 et faire également office de butée axiale.

Dans le montage du palier 10 montré sur la figure 4, pour lequel l'arbre et le moyeu correspondent respectivement aux pièces P1 et P2, l'articulation 1 est agencée entre l'arbre 11 et les bagues intérieures 14B des roulements à billes 14 de grande dimension dans ce cas. Un épaulement 18 est directement ménagé dans la partie externe 4 du corps, portant les roulements, tandis qu'une pièce 19 est rapportée sur l'autre côté de cette partie pour immobiliser axialement les bagues intérieures 14B desdits roulements.

On remarque que, dans les deux cas de montage, les fibres neutres 6 des bras de liaison 5 convergent vers le centre de rotation CR situé sur l'axe X-X, et contenu dans un plan transversal PL passant sensiblement au milieu desdits roulements, ce qui contribue à optimiser l'efficacité de l'articulation.

Une seconde application de l'articulation 1 de l'invention est illustrée schématiquement sur la figure 5.

On sait que les réflecteurs déployables des satellites sont fixés et maintenus en position repliée, à la structure du satellite pendant la phase de lancement, par l'intermédiaire de dispositifs mécaniques de liaison à libération pyrotechnique ou autre. Afin de réduire les charges locales dans le réflecteur, engendrées par l'environnement vibratoire (phase de lancement) et l'environnement thermique (avant le déploiement), le réflecteur est monté sur chaque dispositif par l'intermédiaire d'une articulation à centre de rotation.

La mise en place d'une articulation monobloc 1 conforme à l'invention évite les problèmes préalablement mentionnés avec l'utilisation d'articulation à rotule usuelle avec jeu.

Pour cela, la partie externe 4 du corps monobloc 2 est associée au réflecteur 20 (correspondant à la pièce P2), tandis que la partie interne 3 est fixée au dispositif mécanique pyrotechnique 21, correspondant à la pièce P1. Le centre de rotation CR, vers lequel convergent les bras de liaison 5 élastiquement déformables, est situé sur l'arbre dudit dispositif 21.

En pratique, une articulation à corps monobloc autorise des débattements angulaires de plus ou moins un degré et supporte des charges radiales et/ou axiales et des moments de basculement alternés à des fréquences élevées, lesdits bras de liaison qui constituent des souplesses structurelles se déformant élastiquement, tandis que les parties rigides externe et interne du corps monobloc restent fixes et solidaires de leurs pièces respectives.

## Revendications

1. Articulation à centre de rotation, constituée par un corps monobloc (2) ayant un axe (X-X) et se composant d'une partie interne (3), d'une partie externe (4) et d'une pluralité de bras transversaux (5) élastiquement déformables inclinés par rapport audit axe (X-X), reliant lesdites parties interne et externe et convergeant en direction dudit centre de rotation (CR),
caractérisée en ce que lesdits bras transversaux sont des poutres élastiquement déformables dont les fibres neutres (6) convergent vers ledit centre de rotation (CR) situé sur ledit axe (X-X).

2. Articulation selon la revendication 1,
caractérisée en ce que la section transversale desdits bras (5) est polygonale.

3. Articulation selon l'une des revendications 1 ou 2,
caractérisée en ce que chaque bras de liaison (5) forme sensiblement un angle d'environ 60° par rapport à l'axe dudit corps (2).

4. Articulation selon l'une des revendications 1 à 3,
caractérisée en ce que les rigidités et les souplesses désirées pour l'articulation sont obtenues par ajustement des paramètres suivants :
- nombre et répartition desdits bras (5) ;
- angle des bras (5) par rapport à l'axe (X-X) ;
- section droite et longueur desdits bras (5) ; et
- matière constitutive dudit corps monobloc (2).

5. Articulation selon l'une des revendications 1 à 4,
caractérisée en ce que lesdits bras de liaison élastiquement déformables (5) sont équi-angulairement répartis les uns par rapport aux autres autour desdites parties.

6. Montage d'un palier à roulements entre un arbre et un moyeu,
caractérisé en ce qu'il comprend une articulation à centre de rotation (1) telle que définie selon l'une quelconque des revendications précédentes 1 à 5, et qui est prévue soit entre ledit palier (10) et ledit moyeu (12), soit entre ledit palier (10) et ledit arbre (11).

7. Montage de palier selon la revendication 6,
caractérisé en ce que le plan (PL) transversal audit axe (X-X) et passant par ledit centre de rotation (CR), passe sensiblement au milieu dudit palier (10).

8. Montage d'un réflecteur ou analogue de satellite, sur un dispositif mécanique de liaison à libération pyrotechnique ou autre,
caractérisé en ce qu'il comprend une articulation à centre de rotation (1) telle que définie selon l'une quelconque des revendications précédentes 1 à 5, et qui est agencée entre ledit dispositif (21), par sa partie interne, et ledit réflecteur (10), par sa partie externe.
